# EUROPÄISCHE PATENTSCHRIFT

(11) **EP 1 441 493 B1**
(45) Veröffentlichungstag und Bekanntmachung des Hinweises auf die Patenterteilung: **19.01.2005**
(21) Anmeldenummer: 03001632.3
(22) Anmeldetag: 24.01.2003
(51) Int. Cl.: H04M 3/22, H04Q 7/34, H04L 12/26

(54) **Abhören von Gruppen von Teilnehmern**
Intercepting groups of subscribers
Interception des groups d'abonnés

(43) Veröffentlichungstag der Anmeldung: 28.07.2004
(73) Patentinhaber: SIEMENS AKTIENGESELLSCHAFT, 80333 München (DE)
(72) Erfinder: Murhammer, Leopold, 1060 Wien (AT); Spalt, Bernhard, 1150 Wien (AT)

(56) Entgegenhaltungen:
- WO-A-01/60098
- WO-A-02/084985
- DE-A- 10 106 351
- "Digital cellular telecommunications system (Phase 2+); Lawful interception; Stage 2 (3GPP TS 03.33 version 8.1.0 Release 1999)" ETSI TS 101 509 V8.1.0, Dezember 2000 (2000-12), Seiten 1--64, XP002245690

## Beschreibung

Die Erfindung betrifft Verfahren und Vorrichtungen zum Abhören von Telekommunikationsverbindungen.

Die W001/60098A1 beschreibt die Identifizierung abzuhörender Teilnehmer aufgrund Listen zu überwachender Teilnehmer und deren Überwachung durch eine staatliche Stelle.

In Mobilfunknetzen ist, wie dem Fachmann bekannt ist, eine behördliche Überwachung (=abhören / interception) von zu verdächtigen Telekommunikationsteilnehmern führenden Kommunikationsverbindungen möglich, indem beim Aufbau einer Telekommunikationsverbindung Identifikationsangaben betreffend an der Telekommunikationsverbindung teilnehmende Telekommunikationsteilnehmer mit gespeicherten Listen von zu überwachenden Telekommunikationsteilnehmern verglichen werden, wobei ein Abhören einer Telekommunikationsverbindung veranlasst wird, falls eine Identifikationsangabe mindestens eines Telekommunikationsteilnehmers in einer Liste von Identifikationsangaben betreffend zu überwachende Telekommunikationsteilnehmer enthalten ist.

Aufgabe der vorliegenden Erfindung ist es, die Feststellung, ob Teilnehmer einer Telekommunikationsverbindung abzuhören sind, zu vereinfachen. Die Aufgabe wird jeweils durch die Gegenstände der unabhängigen Ansprüche gelöst.

Indem Identifikationsangabenabkürzungen, die Teile von Identifikationsangaben betreffend mehrere Teilnehmer sein können, in Listen betreffend abzuhörende Telekommunikationsteilnehmer gespeichert werden, kann die Zahl zu überprüfender Listeneinträge verringert werden. Auch ist es möglich, eine sehr große Zahl von Telekommunikationsteilnehmern mit einer Identifikationsangabenabkürzung zu identifizieren, beispielsweise alle Teilnehmer mit der Vorwahl +49 89*.

Dabei kann die Identifikationsangabenabkürzung insbesondere Teil einer Identifikationsangabe betreffend eine Mobilfunkteilnehmernummer sein, womit eine große Zahl von Mobilfunkteilnehmernummern mit einer Identifikationsangabenabkürzung (+49 89*) eines großen Bereichs durch einen Eintrag in einer Liste abzuhörender Telekommunikationsteilnehmer bezeichnet und einfach als abzuhörend identifiziert werden können. Ebenso können bestimmte Gruppen von Mobilfunkendgerätnummern (IMEI) durch Abkürzung von Endgerätenummern als zu Überwachend identifiziert werden.

Ferner ist es möglich, die Erfindung zum Identifizieren einer Vielzahl von Telekommunikationsteilnehmern mit bestimmter Email-Adresse als abzuhörend einzusetzen. Insbesondere können alle Telekommunikationsteilnehmer mit einer bestimmten Domain-Angabe (*@aol.de oder *@arcor.de etc.) als abzuhörend in einer Liste von Identifikationsangabenabkürzungen eingetragen werden.

Die Erfindung ist insbesondere zur Verwendung mit über Mobilfunknetze und/oder Festnetze und/oder Internet verlaufenden Telekommunikationsverbindungen geeignet.

Die Überprüfung kann durch eine Einrichtung in einem Mobilfunknetz oder einen mit einer Einrichtung eines Mobilfunknetzes verbundene Einrichtung folgen.

Ein Einsatz der Erfindung sollte durch behördliche Stellen erfolgen.

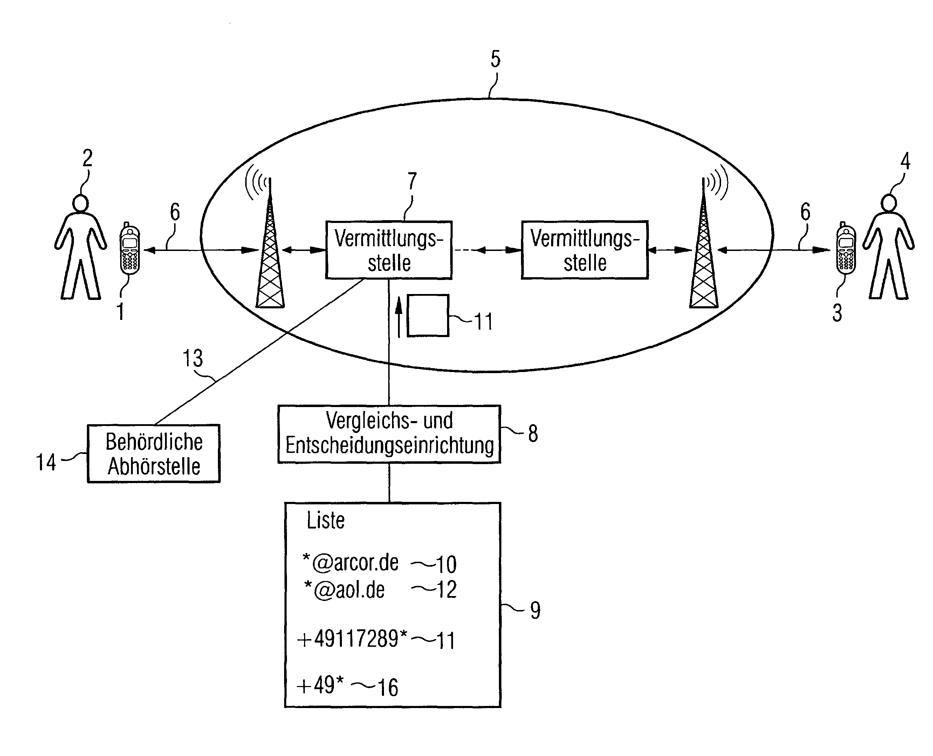

Weitere Merkmale und Vorteile der Erfindung ergeben sich aus den Ansprüchen und der nachfolgenden Beschreibung eines Ausführungsbeispiels anhand der Zeichnung. Dabei zeigt
- Fig. 1: Schematisch Verfahren und Vorrichtungen zum erfindungsgemäßen Abhören von Telekommunikationsverbindungen.

Ein Mobilfunkendgerät 1 eines Teilnehmers 2 soll mit einem Mobilfunkendgerät 3 eines Teilnehmers 4 über eine über ein Telekommunikationsnetz 5 (Mobilfunknetz und/oder Festnetz und/oder Internet) führende Telekommunikationsverbindung 6 verbunden werden. Dabei wird von einer Einrichtung 7 oder einer damit verbundenen Einrichtung 8 eine beim Aufbau der Telekommunikationsverbindung 6 (oder alternativ beim Übertragen von Datenpaketen über die Telekommunikationsverbindung 6 übermittelte), von einem der Teilnehmerendgeräte stammende Identifikationsangabe (betreffend den Teilnehmer (IMSI) und/oder das Endgerät (IMEI) und/oder eine E-Mail Adresse) von einer Vergleichs- und Entscheidungseinrichtung 8 mit einer in einem Speicher 9 gespeicherten Liste 10, 11, 12 von Identifikationsangabenabkürzungen verglichen, um festzustellen, ob mindestens einer der Teilnehmer ein Abhören der Telekommunikationsverbindung notwendig macht. Hierzu wird überprüft, ob die einen Teilnehmer betreffende Identifikationsangabe in einer Identifikationsangabenabkürzung 10, 11, 12 in der gespeicherten Liste 9 enthalten ist. Beispielsweise kann eine Telefonnummer +49 172 89 12345 eines Teilnehmerendgerätes 1 in einer Identifikationsangabenabkürzung +49 172 89* ("*" steht für eine beliebige Sequenz) in der Liste 9 enthalten sein, in welchem Falle eine Überwachung der Telekommunikationsverbindung 6 (mit dem Endgerät 1 dieses Teilnehmers 2) erfolgt -beispielsweise indem über eine Verbindung 13 eine Kopie von über die Telekommunikationsverbindung 6 übermittelten Daten an eine behördliche Abhörstelle 14 übermittelt wird. Anstatt einer Telefonnummernabkürzung kann eine Identifikationsangabenabkürzung auch einen Teil einer E-Mail Adresse eines Teilnehmers 2, 4 darstellen, insbesondere beispielsweise den Domain-Anteil einer E-Mail-Adresse. So kann beispielsweise die Identifikationsangabenabkürzung "@arcor.de" eine Abkürzung der Identifikationsangabe "Vorname1.Nachname1@arcor.de", "Vorname2.Nachname"@arcor.de", "Vorname3.Nachname3@arcor.de", also eine Abkürzung aller E-Mail Angaben, die "@arcor.de" enthalten, umfassen. Falls beim Aufbau einer Telekommunikationsverbindung oder beim Übertragen von Daten über eine Telekommunikationsverbindung Identifikationsangaben von einem der Teilnehmer übermittelt werden, können die Identifikationsangaben betreffend diesen oder den anderen Teilnehmer der Telekommunikationsverbindung von der Vergleich- und Entscheidungseinrichtung 8 mit gespeicherten Identifikationsangabenabkürzungen verglichen werden, um festzustellen, ob eine Identifikationsangabe 1 eines Teilnehmers eine Überwachung der Telekommunikationsverbindung 6 erforderlich macht und es kann gegebenenfalls eine Übermittlung einer Kopie an eine behördliche Abhörstelle 14 durch eine Einrichtung 7 veranlasst werden.

Eine Identifikationsangabe kann eine beliebige einen Telekommunikationsteilnehmer betreffende Identifikationsangabe sein,
also neben einer Telefonnummer oder einer email- Adresse z.B. auch eine SIP- Adresse oder Voice-over-IP- Adresse oder eine beliebige Nummer die man z.B. für IN Anwendungen (oder auch Applikationen in anderen Nodes/Knoten) zu einem Verbindungsaufbau etc verwenden könnte, wie Kreditkartennummern, Autonummern Postleitzahlen.

## Patentansprüche

1. Verfahren zum Entscheiden über das Abhören einer Telekommunikationsverbindung (6),
wobei, zu einer Identifikationsangabe (+49 172 89 12345) betreffend mindestens einen Teilnehmer (1, 2) der Telekommunikationsverbindung (6) überprüft wird, ob diese Identifikationsangabe (+49 172 89 12345) in mindestens einer von in einer Liste (9) gespeicherten Identifikationsangabenabkürzungen (10, 11, 12) betreffend zu überwachende Teilnehmer (1, 2, 3, 4) enthalten ist,
wobei, falls sie in der Liste enthalten ist, ein Abhören (13, 14,) der Telekommunikationsverbindung (6) veranlasst wird.

2. Verfahren nach Anspruch 1, **dadurch gekennzeichnet, dass** die Identifikationsangabenabkürzung (10) Teil einer Identifikationsangabe (15) betreffend eine Mobilfunkteilnehmernummer ist.

3. Verfahren nach einem der vorhergehenden Ansprüche, **dadurch gekennzeichnet, dass** eine Identifikationsangabenabkürzung (10) Teil einer E-Mail Adresse eines Telekommunikationsteilnehmers (1) ist.

4. Verfahren nach Anspruch 3 **dadurch gekennzeichnet, dass** die Identifikationsangabenabkürzung (12) eine Domainname-Angabe oder ein Teil einer Domainname-Angabe in einer E-Mail Adresse eines Telekommunikationsteilnehmers ist.

5. Verfahren nach einem der vorhergehenden Ansprüche **dadurch gekennzeichnet, dass** eine Identifikationsangabenabkürzung (16) Teil einer Telekommunikationsendgerätsidentifikation (IMEI) ist.

6. Verfahren nach einem der vorhergehenden Ansprüche **dadurch gekennzeichnet, dass** die Telekommunikationsverbindung über ein Mobilfunknetz und/oder Festnetz und/oder das Internet verläuft.

7. Verfahren nach einem der vorhergehenden Ansprüche **dadurch gekennzeichnet, dass** die Überprüfung durch eine Einrichtung (7) eines Telekommunikationsnetzes über das die Telekommunikationsverbindung verläuft oder eine damit verbundene Einrichtung (8) erfolgt.

8. Verfahren nach einem der vorhergehenden Ansprüche **dadurch gekennzeichnet, dass** das Abhören durch eine behördliche Einrichtung (14) erfolgt.

9. Verfahren nach einem der vorhergehenden Ansprüche **dadurch gekennzeichnet, dass** eine Überprüfung (8) von Identifikationsangaben beim Aufbau einer Verbindung erfolgt.

10. Verfahren nach einem der vorhergehenden Ansprüche **dadurch gekennzeichnet, dass** eine Überprüfung von Identifikationsangaben von Telekommunikationsteilnehmern beim Übertragen von Datenpaketen über eine Telekommunikationsverbindung (6) erfolgt.

11. Vorrichtung (8, 9) zum Entscheiden über das Abhören von Telekommunikationsverbindungen,
- mit einer in einem Speicher (9) gespeicherten Liste (10, 11, 12, 16) von Identifikationsangabenabkürzungen betreffend abzuhörende Telekommunikationsteilnehmer (1, 3),
- mit einer Vergleichseinrichtung (8) zum Vergleichen von über eine Telekommunikationsverbindung (6) über mittelten, Teilnehmer der Telekommunikationsverbindung betreffenden Identifikationsangaben mit gespeicherten (9) Identifikationsangabenabkürzungen (10 - 12),
- mit einer Entscheidungseinrichtung (8) zum Veranlassen einer Überwachung einer Telekommunikationsverbindung (6) mit mindestens einem durch eine Identifikationsangabenabkürzung als zu überwachend identifizierten (8) Telekommunikationsteilnehmer (1, 2).

## Claims

1. A method for deciding about the interception of a telecommunications connection (6), wherein a check is made with regard to identification data (+49 172 89 12345) relating to at least one subscriber (1, 2) of the telecommunications connection (6) as to whether this identification data (+49 172 89 12345) is contained in at least one of the abbreviations of identification data (10, 11, 12), stored in a list (9), relating to subscribers to be monitored (1, 2, 3, 4),
wherein, if it is contained in the list, interception (13, 14) of the telecommunications connection (6) is prompted.

2. A method according to claim 1, **characterised in that** the abbreviation of identification data (10) is part of identification data (15) relating to a mobile subscriber number.

3. A method according to any one of the preceding claims, **characterised in that** an abbreviation of the identification data (10) is part of an e-mail address of a telecommunications subscriber (1).

4. A method according to claim 3, **characterised in that** the abbreviation of identification data (12) is domain name data or a part of domain name data in an e-mail address of a telecommunications subscriber.

5. A method according to any one of the preceding claims, **characterised in that** an abbreviation of identification data (16) is part of a telecommunications terminal equipment identification (IMEI).

6. A method according to any one of the preceding claims, **characterised in that** the telecommunications connection routes via a mobile network and/or a fixed network and/or the Internet.

7. A method according to any one of the preceding claims, **characterised in that** the checking is carried out by a device (7) of a telecommunications network via which the telecommunications connection is routed or by a device (8) connected thereto.

8. A method according to any one of the preceding claims, **characterised in that** the interception is carried out by a government agency device (14).

9. A method according to any one of the preceding claims, **characterised in that** a checking (8) of identification data is carried out when a connection is established.

10. A method according to any one of the preceding claims, **characterised in that** a checking of identification data of telecommunications subscribers is carried out when data packets are transferred via a telecommunications connection (6).

11. A device (8, 9) for deciding about the interception of telecommunications connections,
- comprising a list (10, 11, 12, 16) of abbreviations of identification data relating to telecommunications subscribers (1, 3) to be intercepted, which list is stored in a memory (9),
- comprising a comparison device (8) for comparing identification data, communicated via a telecommunications connection (6), relating to subscribers of the telecommunications connection with stored (9) abbreviations of identification data (10 - 12),
- comprising a decision device (8) for prompting monitoring of a telecommunications connection (6) comprising at least one telecommunications subscriber (1, 2) identified (8) as to be monitored by an abbreviation of identification data

## Revendications

1. Procédé pour décider de l'interception d'une liaison de télécommunication (6), dans lequel on vérifie pour une indication d'identification (+49 172 89 12345) concernant au moins un abonné (1, 2) de la liaison de télécommunication (6) si cette indication d'identification (+49 172 89 12345) est incluse dans au moins une des abréviations d'indications d'identification (10, 11, 12) mémorisées dans une liste (9) concernant des abonnés (1, 2, 3, 4) à surveiller, et dans lequel, si elle est incluse dans la liste, une interception (13, 14) de la liaison de télécommunication (6) est demandée.

2. Procédé selon la revendication 1, **caractérisé en ce que** l'abréviation d'indications d'identification (10) fait partie d'une indication d'identification (15) concernant un numéro de téléphonie mobile.

3. Procédé selon l'une quelconque des revendications précédentes, **caractérisé en ce qu'**une abréviation d'indications d'identification (10) fait partie d'une adresse e-mail d'un abonné de télécommunication (1).

4. Procédé selon la revendication 3, **caractérisé en ce que** l'abréviation d'indications d'identification (12) est une indication de nom de domaine ou une partie d'une indication de nom de domaine dans une adresse e-mail d'un abonné de télécommunication.

5. Procédé selon l'une quelconque des revendications précédentes, **caractérisé en ce qu'**une abréviation d'indications d'identification (16) fait partie d'une identification de terminal de télécommunication (IMEI).

6. Procédé selon l'une quelconque des revendications précédentes, **caractérisé en ce que** la liaison de télécommunication passe par un réseau de téléphonie mobile et/ou un réseau fixe et/ou Internet.

7. Procédé selon l'une quelconque des revendications précédentes, **caractérisé en ce que** le contrôle par un appareil (7) d'un réseau de télécommunication passe par la liaison de télécommunication ou un appareil (8) relié au premier.

8. Procédé selon l'une quelconque des revendications précédentes, **caractérisé en ce que** l'écoute s'effectue par un appareil (14) administratif.

9. Procédé selon l'une quelconque des revendications précédentes, **caractérisé en ce qu'**une surveillance (8) d'indications d'identification s'effectue lors de l'établissement d'une liaison.

10. Procédé selon l'une quelconque des revendications précédentes, **caractérisé en ce qu'**une surveillance d'indications d'identification d'abonnés de télécommunication s'effectue lors de la transmission de paquets de données au moyen d'une liaison de télécommunication (6).

11. Dispositif (8, 9) pour décider de l'interception de liaisons de télécommunication,
- avec une liste (10, 11, 12, 16) mémorisée dans une mémoire (9) d'abréviations d'indications d'identification concernant des abonnés de télécommunication (1, 3) à intercepter,
- avec un appareil de comparaison (8) pour la comparaison d'indications d'identification concernant des abonnés de la liaison de télécommunication et transmises au moyen d'une liaison de télécommunication (6) avec des abréviations d'indications d'identification (10 - 12) mémorisées (9),
- avec un appareil de décision (8) pour la demande de surveillance d'une liaison de télécommunication (6) avec au moins un abonné de télécommunication (1, 2) identifié par une abréviation d'indications d'identification comme abonné à surveiller.
